# EUROPÄISCHE PATENTSCHRIFT

(11) **EP 3 774 403 B1**
(45) Veröffentlichungstag und Bekanntmachung des Hinweises auf die Patenterteilung: **02.03.2022**
(21) Anmeldenummer: 19716308.2
(22) Anmeldetag: 21.03.2019
(51) Int. Cl.: B60C 23/00

(54) **REIFENDRUCKREGULIERUNGSEINRICHTUNG EINES LUFTBEREIFTEN OFF-HIGHWAY-FAHRZEUGS**
TIRE PRESSURE CONTROL DEVICE OF AN OFF-HIGHWAY VEHICLE HAVING PNEUMATIC TIRES
DISPOSITIF DE RÉGULATION DE LA PRESSION DES PNEUMATIQUES D'UN VÉHICULE HORS ROUTE MONTÉ SUR PNEUMATIQUES

(30) Priorität: 05.04.2018 DE 102018108006
(43) Veröffentlichungstag der Anmeldung: 17.02.2021
(73) Patentinhaber: ZF CV Systems Europe BV, 1170 Brussels (BE)
(72) Erfinder: BECHTHOLD, Sebastian, 30161 Hannover (DE); BRÜTT, Mirko, 30952 Ronnenberg (DE); HAVERKAMP, Michael, 30455 Hannover (DE); KAMISCHKE, Waldemar, 31535 Neustadt (DE); SABELHAUS, Dennis, 30163 Hannover (DE)
(74) Vertreter: Rabe, Dirk-Heinrich
(86) Internationale Anmeldenummer: PCT/EP2019/057122
(87) Internationale Veröffentlichungsnummer: WO 2019/192854

(56) Entgegenhaltungen:
- AT-U1- 9 131

## Beschreibung

Die Erfindung betrifft eine Reifendruckregulierungseinrichtung eines luftbereiften Off-Highway-Fahrzeugs, mittels der die Reifendrücke der Fahrzeugräder mindestens einer Fahrzeugachse des Fahrzeugs während der Fahrt oder während eines Arbeitseinsatzes veränderbar sind, wobei jedes luftbereifte Fahrzeugrad ein druckgesteuertes Radventil aufweist, welches mit einer Steuerdruckleitung und mit einer Versorgungsdruckleitung pneumatisch verbunden ist, wobei den Steuerdruckleitungen und den Versorgungsdruckleitungen Ventilmittel zugeordnet sind, welche mit einer Druckluftversorgungseinrichtung des Fahrzeugs pneumatisch verbunden oder verbindbar sind und durch eine elektronische Steuereinheit ansteuerbar sind, um bedarfsweise die Radventile eines oder mehrerer der Fahrzeugräder zu betätigen und deren Reifendrücke zu regulieren.

Luftbereifte Off-Highway-Fahrzeuge, wie zum Beispiel landwirtschaftliche Traktoren, Baufahrzeuge, Militärfahrzeuge, Spezialfahrzeuge oder Lastwagen, die auch oder vornehmlich für einen Offroad-Einsatz vorgesehen sind, sind zunehmend mit einer Reifendruckregulierungseinrichtung versehen, mittels welcher die Reifendrücke der Fahrzeugräder veränderbar sind, also bedarfsweise erhöht oder abgesenkt werden können. Während die Fahrt auf befestigten Straßen zur Erzielung eines niedrigen Rollwiderstands und einer guten Haftung der Fahrzeugreifen auf der Fahrbahn eine durch einen erhöhten Reifendruck bewirkte kleine Aufstandsfläche der Fahrzeugreifen erfordert, ist für den Offroad-Einsatz, beispielsweise bei der Feldarbeit auf einem Acker oder bei der Holzernte im Wald, ein möglichst niedriger Reifendruck vorteilhaft, durch den aufgrund der vergrößerten Aufstandsfläche der Fahrzeugreifen ein Einsacken der Fahrzeugräder im weichen Boden sowie eine unerwünschte Verdichtung des Bodens verhindert und die Traktion der angetriebenen Fahrzeugräder erhöht wird. Off-Highway-Fahrzeuge sind meistens mit einer Druckluftbremsanlage ausgerüstet, so dass die Reifendruckregulierungseinrichtung vorteilhaft die vorhandene Druckluftversorgungseinrichtung der Bremsanlage nutzen kann, um die Reifendrücke der Fahrzeugräder während der Fahrt oder während eines Arbeitseinsatzes des Fahrzeugs bedarfsweise verstellen zu können. Derartige Reifendruckregulierungseinrichtungen sind in verschiedenen Ausführungen bekannt, wobei sich die bekannten Systeme im Wesentlichen in der Anordnung und der Anzahl von Ventilen und pneumatischen Zuleitungen sowie deren Verschaltung unterscheiden. Ein Beispiel einer herkömmlichen Reifendruckregulierungseinrichtung findet sich in der AT 9 131 U1.

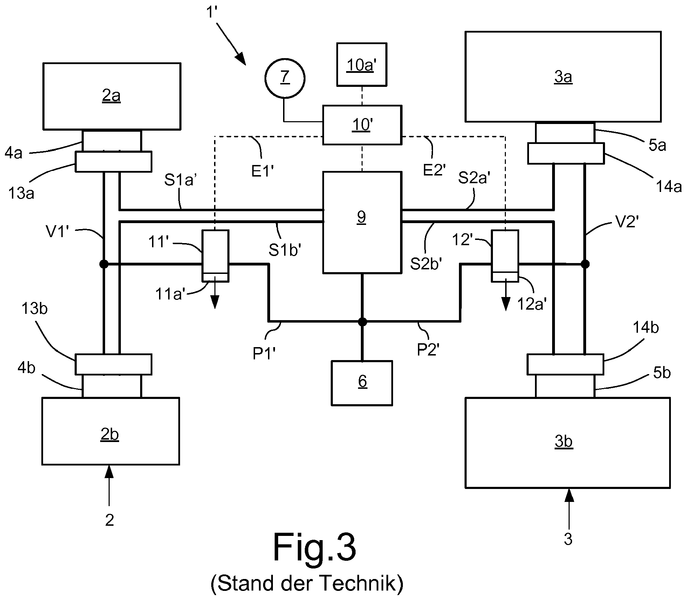

Bei einer in Fig. 3 schematisch und vereinfacht dargestellten bekannten Reifendruckregulierungseinrichtung 1' eines zweiachsigen Off-Highway-Fahrzeugs, beispielsweise für einen Traktor, weisen die vier Fahrzeugräder 2a, 2b, 3a, 3b der zwei Fahrzeugachsen 2, 3 vier druckgesteuerte Radventile 4a, 4b, 5a, 5b auf, die mit vier Steuerdruckleitungen S1a', S1b', S2a', S2b' sowie mit zwei Versorgungsdruckleitungen V1', V2' über jeweils zugeordnete Drehüberträger 13a, 13b, 14a, 14b pneumatisch verbunden sind. Die vier Steuerdruckleitungen S1a', S1b', S2a', S2b' und die beiden Versorgungsdruckleitungen V1', V2' können aus einer Druckluftversorgungseinrichtung 6 des Fahrzeugs als Druckluftquelle für die Reifendruckregulierungseinrichtung 1' mit Druckluft beaufschlagt werden.

Die beiden Versorgungsdruckleitungen V1', V2' sind über zwei pneumatische Leitungen P1', P2' mit der Druckluftversorgungseinrichtung 6 pneumatisch verbunden. Die Steuerdruckleitungen S1a', S1b', S2a', S2b' sind mit einer als Ventilblock ausgebildeten zentralen Steuerventileinrichtung 9 pneumatisch verbunden. Die Steuerventileinrichtung 9 ist ihrerseits mit der Druckluftversorgungseinrichtung 6 pneumatisch verbunden sowie mit einer elektronischen Steuereinheit 10' elektrisch verbunden. Die elektronische Steuereinheit 10' ist mit einer Spannungsversorgung 7 des Fahrzeugs elektrisch verbunden.

Mittels der elektronischen Steuereinheit 10' kann die Steuerventileinrichtung 9 automatisch oder mittels einer manuellen Bedieneinheit 10a' angesteuert und beispielsweise elektromagnetisch betätigt werden, um die Radventile 4a, 4b, 5a, 5b der Fahrzeugräder 2a, 2b, 3a, 3b einzeln mit der Druckluftversorgungseinrichtung 6 pneumatisch zu beaufschlagen oder von dieser abzusperren.

Von der zentralen Steuerventileinrichtung 9 geht für jedes der vier Radventile 4a, 4b, 5a, 5b eine eigene Steuerdruckleitung S1a', S1b', S2a', S2b' aus. Durch pneumatisches Beaufschlagen können die Radventile 4a, 4b, 5a, 5b geschaltet werden, so dass die entsprechenden Radreifen der Fahrzeugräder 2a, 2b, 3a, 3b mit den betreffenden Versorgungsdruckleitungen V1', V2' in Druckverbindung gesetzt oder von diesen abgesperrt werden. In den beiden pneumatischen Leitungen P1', P2', welche die Versorgungsdruckleitungen V1', V2' mit der Druckluftversorgungseinrichtung 6 verbinden, sind ansteuerbare Versorgungsventile 11', 12' angeordnet, die beispielsweise als Elektromagnetventile ausgebildet sind. Diese Versorgungsventile 11', 12' sind über elektrische Leitungen E1', E2' mit der elektronischen Steuereinheit 10' elektrisch verbunden und können von dieser angesteuert werden, um die Versorgungsdruckleitungen V1', V2' je nach Schaltstellungen der Versorgungsventile 11', 12' über die Druckluftversorgungseinrichtung 6 zu belüften oder über an die Versorgungsventile 11', 12' angeschlossene Auslässe 11a', 12a' zu entlüften.

Die Fahrzeugräder 2a, 2b, 3a, 3b, beziehungsweise die Radventile 4a, 4b, 5a, 5b einer jeden Fahrzeugachse 2, 3 sind jeweils über eine gemeinsame Versorgungsdruckleitung V1' oder V2' mit Druckluft versorgbar. Die pneumatische Versorgung der Fahrzeugräder 2a, 2b, 3a, 3b erfolgt also achsweise, wobei jeder Fahrzeugachse 2, 3 ein Versorgungsventil 11', 12' zugeordnet ist.

Zum Entlüften der Radreifen der Fahrzeugräder 2a, 2b, 3a, 3b steht an jeder Fahrzeugachse 2, 3 jeweils der Auslass 11a', 12a' des Versorgungsventils 11', 12' zur Verfügung. Jedes Radventil 4a, 4b, 5a, 5b kann über die an dieses Radventil 4a, 4b, 5a, 5b angeschlossene Steuerdruckleitung S1a', S1b', S2a', S2b' durch Ansteuern der zentralen Steuerventileinrichtung 9 pneumatisch offen geschaltet und dadurch der betreffende Radreifen des Fahrzeugrades 2a, 2b, 3a, 3b mit der an das Radventil 4a, 4b, 5a, 5b angeschlossenen Versorgungsdruckleitung V1', V2' in Druckverbindung gesetzt werden. Der Radreifen des jeweiligen Fahrzeugrades 2a, 2b, 3a, 3b kann durch Ansteuern des Versorgungsventils 11', 12' der betreffenden Versorgungsdruckleitung V1', V2' je nach Schaltstellung des Versorgungsventils 11', 12' belüftet oder entlüftet werden. Durch eine manuelle Eingabe an der Bedieneinheit 10a der elektronischen Steuereinheit 10 oder durch eine automatische Reifendruckregulierungsfunktion können somit die Reifendrücke an den Fahrzeugrädern 2a, 2b, 3a, 3b einzeln erhöht oder abgesenkt werden. Auf eine Darstellung von Drucksensoren und Druckbegrenzungsventilen wurde in der Fig.3 verzichtet. Diese Bauteile können aber vorgesehen sein.

Bei Reifendruckregulierungseinrichtungen gemäß Fig. 3 ist wie bereits erwähnt jedem Fahrzeugrad beziehungsweise jedem Radventil eine eigene Steuerdruckleitung zugeordnet. Jede dieser Steuerdruckleitungen ist an eine für alle Fahrzeugachsen gemeinsame zentrale Steuerventileinrichtung, die eine der Anzahl der vorhandenen Steuerdruckleitungen entsprechende Anzahl von schaltbaren pneumatischen Anschlüssen aufweist, angeschlossen und über diese Steuerventileinrichtung einzeln pneumatisch ansteuerbar. Diese bekannte Steuerventileinrichtung ist also für eine vorgegebene Anzahl von Fahrzeugrädern beziehungsweise Radventilen ausgelegt und dahingehend begrenzt. In der Regel sind Reifendruckregulierungseinrichtungen für Zweiachs-Fahrzeuge konzipiert, beispielsweise für zweiachsige Traktoren. Eine Erweiterung mit zusätzlichen Anschlüssen für Steuerdruckleitungen für weitere Fahrzeugachsen beziehungsweise weitere Fahrzeugräder ist nicht ohne größeren Aufwand möglich, zumal der Bauraum, welcher für ein Gehäuse der Steuerventileinrichtung verfügbar ist, meistens begrenzt ist.

Außerdem ist bei derartigen Reifendruckregulierungseinrichtungen den Fahrzeugrädern beziehungsweise den Radventilen jeder Fahrzeugachse wie bereits erwähnt eine gemeinsame Versorgungsdruckleitung mit einem gemeinsamen Versorgungsventil zugeordnet. Pro Fahrzeugachse ist also ein Versorgungsventil erforderlich. Geht man standardmäßig von einer Reifendruckregulierungseinrichtung eines zweiachsigen Fahrzeugs aus, so würde eine Anpassung der Reifendruckregulierungseinrichtung an ein Fahrzeug mit drei, vier oder mehr Achsen zu erheblichen Mehrkosten für weitere Versorgungsventile führen.

Außerdem ist der Anschluss der achsweise angeordneten Versorgungsdruckkreise zur Atmosphäre ein Engpass, der sich insbesondere dann, wenn die Reifengrößen achsweise sehr unterschiedlich sind, nachteilig auswirken kann. Da die Druckluftversorgung achsweise über ein gemeinsames Versorgungsventil pro Fahrzeugachse erfolgt, kann auch das Absenken eines oder beider Reifendrücke der Fahrzeugräder dieser Achse, je nachdem ob ein oder beide Radventile durch die Steuerventileinrichtung offen geschaltet sind, immer nur aus dem einzigen zugehörigen Auslass des Versorgungsventils an dieser Achse erfolgen. Vornehmlich Traktoren können außerdem achsweise sehr unterschiedliche Reifengrößen, insbesondere an der Vorderachse wesentlich kleinere Räder als an der Hinterachse besitzen. Wenn alle Reifendrücke gleichzeitig abgesenkt werden, führt dies dazu, dass die Absenkung des Reifendruckes an den Hinterrädern deutlich länger dauert als an den Vorderädern. In diesem Fall wird der Auslass an der Vorderachse nicht optimal ausgelastet, während der Auslass an der Hinterachse übermäßig lange aktiv ist, so dass der Entlüftungsprozess bei der bekannten Anordnung einer Reifendruckregulierungseinrichtung insgesamt nicht optimal ist.

Die EP 1 362 716 B1 zeigt eine andere Reifendruckregulierungseinrichtung, bei der jeder Fahrzeugachse eine gemeinsame Steuerdruckleitung mit einem für die betreffende Achse gemeinsamen Steuerventil sowie eine gemeinsame Versorgungsdruckleitung mit einem für die betreffende Achse gemeinsamen Versorgungsventil zugeordnet ist. Dadurch ist zwar die Anzahl der Steuerventilkomponenten im Vergleich geringer, allerdings mit dem Nachteil, dass die Reifendrücke nur achsweise, nicht jedoch einzeln verändert werden können, da immer beide Radventile der beiden Fahrzeugräder einer Achse gleichzeitigt betätigt werden und die Druckluftversorgung ebenfalls achsweise für beide Fahrzeugräder geschaltet wird.

Aus der DE 10 2008 062 066 A1 ist eine weitere Reifendruckregulierungseinrichtung bekannt, bei der die Steuerdruck- und Versorgungsdruckvorgänge zur Reifendruckveränderung über eine einzige als Steuerdruckleitung sowie als Versorgungsdruckleitung fungierende pneumatische Zuleitung pro Fahrzeugachse erfolgen. Die Betätigung der Radventile ist impulsgesteuert und von der Höhe der jeweiligen Druckimpulse abhängig, wodurch die Ansteuerung der Ventilkomponenten relativ aufwendig ist. Bei dieser Anordnung ist für jede Fahrzeugachse jeweils ein zentrales Steuerventil sowie ein elektro-mechanisch betriebener Druckverteiler und ein Drucksensor vorgesehen, welche in einem gemeinsamen Gehäuse pro Fahrzeugachse untergebracht sind. Jede Fahrzeugachse erfordert einen derartigen eigenen elektropneumatischen Druckverteiler. Die Reifendruckregulierung erfolgt achsweise, eine Reifendruckveränderung von einzelnen Rädern innerhalb einer Fahrzeugachse ist nicht vorgesehen.

Vor diesem Hintergrund lag der Erfindung die Aufgabe zugrunde, eine Reifendruckregulierungseinrichtung eines luftbereiften Off-Highway-Fahrzeugs der eingangs genannten Art vorzustellen, die im Vergleich zu den bekannten Reifendruckregulierungseinrichtungen effizientere Betriebs- und Steuerungseigenschaften aufweist. Insbesondere soll diese Reifendruckregulierungseinrichtung einfach und kostengünstig an eine vorgegebene Anzahl von Fahrzeugachsen angepasst werden können. Dabei soll die Reifendruckregulierungseinrichtung eine Reifendruckverstellung an einzelnen Fahrzeugrädern erlauben. Außerdem sollen die Druckregulierungsvorgänge an den Fahrzeugrädern möglichst zeitoptimiert durchführbar sein. Außerdem soll ein luftbereiftes Off-Highway-Fahrzeug vorgestellt werden, welches eine solche Reifendruckregulierungseinrichtung aufweist

Die Lösung dieser Aufgabe wird mit einer Reifendruckregulierungseinrichtung erreicht, welche die Merkmale des Anspruchs 1 aufweist, während vorteilhafte Ausgestaltungen und Weiterbildungen der Erfindung den zugeordneten abhängigen Ansprüchen entnehmbar sind. Das Off-Highway-Fahrzeug, welches eine erfindungsgemäße Reifendruckregulierungseinrichtung aufweist, wird mit dem unabhängigen Anspruch 9 beansprucht.

Der Erfindung lag die Erkenntnis zugrunde, dass bekannte Reifendruckregulierungseinrichtungen, bei denen die Fahrzeugräder achsweise durch parallel angeordnete Steuerdruckleitungen und Versorgungsdruckleitungen miteinander verbunden sind, einen hohen Kosten- und Bauteilaufwand an Zuleitungen, Ventilmitteln, Steuerungsmitteln und den dafür erforderlichen Einbauraum erfordern, insbesondere je mehr Fahrzeugachsen, welche in die Reifendruckregulierung einbezogen werden sollen, das Fahrzeug aufweist. Durch eine Architektur von Zuleitungen, Ventil- und Steuerungsmitteln, die nicht von vornherein auf eine bestimmte Anzahl von Fahrzeugachsen ausgelegt ist, sondern an eine beliebige Anzahl von Achsen angepasst werden kann, ohne dafür eine sich achsweise wiederholende parallele Anordnung von Steuerdruckleitungen und Versorgungsdruckleitungen zu benötigen, kann der Aufwand an pneumatischen Leitungen sowie an Ventil- und Steuerungsmitteln, insbesondere bei einem Fahrzeug mit drei, vier oder mehr Achsen, erheblich verringert werden. Durch eine solche Architektur können die verbauten Komponenten zudem effizienter genutzt werden, so dass zudem ein verbesserter Betriebskomfort erreicht werden kann.

Die Erfindung betrifft daher eine Reifendruckregulierungseinrichtung eines luftbereiften Off-Highway-Fahrzeugs, mittels der die Reifendrücke der Fahrzeugräder mindestens einer Fahrzeugachse des Fahrzeugs während der Fahrt oder während eines Arbeitseinsatzes veränderbar sind, wobei jedes luftbereifte Fahrzeugrad ein druckgesteuertes Radventil aufweist, welches mit einer Steuerdruckleitung und mit einer Versorgungsdruckleitung pneumatisch verbunden ist. Hierbei sind den Steuerdruckleitungen und den Versorgungsdruckleitungen Ventilmittel zugeordnet, welche mit einer Druckluftversorgungseinrichtung des Fahrzeugs pneumatisch verbunden oder verbindbar sind und durch eine elektronische Steuereinheit ansteuerbar sind, um bedarfsweise die Radventile eines oder mehrerer der Fahrzeugräder zu betätigen und deren Reifendrücke zu regulieren.

Zur Lösung der gestellten Aufgabe sieht die Erfindung bei einer solchen Reifendruckregulierungseinrichtung vor, dass jeder der in die Reifendruckregulierungseinrichtung einbezogenen Fahrzeugachsen des Fahrzeugs jeweils eine Steuerdruckleitung mit jeweils einem Steuerventil zugeordnet ist, so dass die Betätigung der Radventile der Fahrzeugräder des Fahrzeugs über die Steuerventile achsweise erfolgt, und dass jeder der beiden linken und rechten Fahrzeugseiten des Fahrzeugs jeweils eine Versorgungsdruckleitung mit jeweils mindestens einem Versorgungsventil zugeordnet ist, so dass die Druckluftversorgung der Fahrzeugräder des Fahrzeugs über die Versorgungsventile seitenweise erfolgt.

Demnach ist bei der Reifendruckregulierungseinrichtung gemäß der Erfindung eine Überkreuz-Anordnung von Versorgungsdruckleitungen mit Versorgungsventilen und Steuerdruckleitungen mit Steuerventilen vorgesehen. Das heißt, dass jeweils ein Versorgungsventil für eine Fahrzeugseite und jeweils ein Steuerventil pro Fahrzeugachse angeordnet sind. Es können auch mehrere Versorgungsventile pro Fahrzeugseite vorteilhaft vorgesehen sein, wie später noch erläutert wird, dies ist aber für die Funktion der Reifendruckregulierungseinrichtung nicht zwingend notwendig.

Diese Anordnung ist mit geringem Aufwand an Komponenten und Montagekosten an eine vorgegebene Achsenzahl eines Off-Highway-Fahrzeugs anpassbar. Insbesondere ist bei einer Erweiterung für mehr als zwei Fahrzeugachsen lediglich eine zusätzliche Steuerdruckleitung mit einem zusätzlichen Steuerventil pro zusätzlicher Fahrzeugachse vorzusehen. Besonders vorteilhaft ist es, dass bei einer Erweiterung der Achsenzahl keine zusätzlichen Versorgungdruckleitungen und keine zusätzlichen Versorgungsventile erforderlich sind. Dadurch ergibt sich eine Einsparung an Komponenten und Montagekosten im Vergleich zu herkömmlichen Reifendruckregulierungseinrichtungen für mehr als zwei Fahrzeugachsen.

Zudem wird ein zentraler Ventilblock, der in der Regel mit einem großen Bauraumbedarf einhergeht, nicht benötigt. Stattdessen werden vorteilhaft vergleichsweise kleine und einbaufreundliche Steuerventile verwendet. Dadurch werden Einbauprobleme, wie sie bei der Erweiterung eines ohnehin schon großen Ventilblocks mit zusätzlichen Anschlüssen für drei oder mehr Fahrzeugachsen entstehen könnten, von vornherein vermieden.

Die Reifendruckregulierungseinrichtung gemäß der Erfindung ist zwar vorzugsweise für Fahrzeuge mit zwei oder mehr als zwei Achsen vorgesehen, sie kann aber ebenso an lediglich einer Fahrzeugachse, beispielsweise an einem Einachsanhänger eingesetzt werden. Dadurch wird eine Reifendruckregulierungseinrichtung zur Verfügung gestellt, die ausgehend von einem zweiachsigen Fahrzeug, relativ einfach und kostengünstig sowohl an einachsige Fahrzeuge als auch an vielachsige Fahrzeuge anpassbar und in diesen implementierbar ist.

Bei einer vorteilhaften Ausführungsform der erfindungsgemäßen Reifendruckregulierungseinrichtung ist vorgesehen sein, dass die jeweiligen Steuerventile zwei Schaltstellungen aufweisen, wobei in einer ersten Schaltstellung des Steuerventils die an die zugehörige Steuerdruckleitung angeschlossenen Radventile der Fahrzeugräder der betreffenden Fahrzeugachse mit der Druckluftversorgungseinrichtung des Fahrzeugs pneumatisch verbunden und in einer zweiten Schaltstellung von dieser abgesperrt sind. Zudem weisen die jeweiligen Versorgungsventile drei Schaltstellungen auf, wobei in einer ersten Schaltstellung des Versorgungsventils die an die zugehörige Versorgungsdruckleitung angeschlossenen Radventile der Fahrzeugräder der betreffenden Fahrzeugseite mit der Druckluftversorgungseinrichtung verbunden sind, in einer zweiten Schaltstellung mit einem Auslass verbunden sind, und in einer dritten Schaltstellung von der Druckluftversorgungseinrichtung und von dem Auslass abgesperrt sind.

Die beispielsweise als elektromagnetische Wegeventile ausgebildeten Steuerventile können demnach zwei Schaltstellungen aufweisen. In seiner ersten Schaltstellung verbindet ein Steuerventil die ihm zugeordneten druckgesteuerten, beispielsweise als federbelastete Rückschlagventile ausgebildeten Radventile der betreffenden Fahrzeugachse mit der Druckluftversorgung, so dass diese pneumatisch beaufschlagt werden und dadurch ihrerseits eine Verbindung mit der jeweiligen zugehörigen Versorgungsdruckleitung freischalten. In seiner zweiten Schaltstellung sperrt das Steuerventil die betreffenden Radventile mit von der Druckluftversorgung ab.

Die beispielsweise jeweils aus einem oder mehreren miteinander verschalteten elektromagnetischen Wegeventilen bestehenden Versorgungsventile können vorteilhaft drei Schaltstellungen aufweisen. In seiner ersten Schaltstellung verbindet das Versorgungsventil die an die betreffende linke oder rechte Versorgungsleitung angeschlossenen Radventile mit der Druckluftversorgung. In seiner zweiten Schaltstellung verbindet das Versorgungsventil die an die betreffende linke oder rechte Versorgungsleitung angeschlossenen Radventile mit einem Auslass an die Atmosphäre. In seiner dritten Schaltstellung sperrt das Versorgungsventil die an die betreffende linke oder rechte Versorgungsleitung angeschlossenen Radventile sowohl von der Druckluftversorgung als auch von dem Auslass ab. Die jeweiligen Schaltstellungen der linken und rechten Versorgungsventile wirken sich jeweils nur auf die Reifendrücke derjenigen Fahrzeugräder aus, deren Radventile durch die zugehörigen Steuerventile auf geschaltet sind. Die Ansteuerung der Steuerventile und der Versorgungsventile erfolgt über eine elektronische Steuereinheit. Diese ist bevorzugt in einen CAN-Bus eines Bordnetzes des Fahrzeugs integriert.

Die Überkreuz-Anordnung der Steuerdruck- und Versorgungsdruckkomponenten erlaubt im Zusammenwirken mit den möglichen Schaltstellungen der Steuerventile und der Versorgungsventile eine effiziente Reifendruckregulierung, die wahlweise und nach Bedarf als Einzelreifendruckregulierung an einzelnen Fahrzeugrädern, als achsweise Reifendruckregulierung an einzelnen Fahrzeugachsen, oder als Reifendruckregulierung aller angeschlossenen Fahrzeugräder gleichzeitig durchgeführt werden kann.

Im Falle einer einzelnen Radbelüftung, beispielsweise des rechten Vorderreifens, werden das rechte Versorgungsventil und das vordere Steuerventil betätigt. Dadurch wird das rechte vordere Radventil betätigt und es strömt Druckluft in den vorderen rechten Radreifen, um dessen Reifendruck anzuheben. Zusätzlich wird das linke vordere Radventil auch betätigt, da das Steuerventil die Radventile achsweise beaufschlagt. Dies führt zwar zu einem marginalen Druckverlust im linken vorderen Radreifen. Da das Leitungsvolumen der linken Versorgungdruckleitung im Vergleich zum Reifenvolumen aber sehr klein ist, kann dieser Verlust ohne Nachteil hingenommen werden.

Im Falle einer achsweisen Radbelüftung, beispielsweise der Fahrzeugräder der Vorderachse, werden das rechte Versorgungsventil und das linke Versorgungsventil sowie das vorderachsseitige Steuerventil betätigt. Bei einer Radbelüftung der Fahrzeugräder der Vorderachse und der Hinterachse, werden das rechte Versorgungsventil und das linke Versorgungsventil sowie das vorderachsseitige und das hinterachsseitige Steuerventil betätigt.

Bei mehr als zwei Achsen, sind zur Belüftung aller Fahrzeugräder zusätzlich die mit zusätzlichen Steuerdruckleitungen an die zusätzlichen Radventile angeschlossenen Steuerventile der zusätzlichen Achsen zu betätigen, während die beiden vorhandenen Versorgungsventile grundsätzlich eine beliebige Anzahl von Fahrzeugachsen mit Druckluft versorgen können. Dazu müssen lediglich die beiden Versorgungsdruckleitungen zu den weiteren Radventilen verlängert beziehungsweise mit entsprechenden Abzweigungen versehen werden. Zusätzliche Versorgungsventile sind jedoch nicht erforderlich.

Gemäß einer Ausführungsform der Erfindung kann vorgesehen sein, dass jedem Versorgungsventil jeweils ein Atmosphärenauslass zugeordnet ist, so dass eine gleichzeitige Druckabsenkung an mehreren Fahrzeugrädern mehrerer Fahrzeugachsen fahrzeugseitenweise ansteuerbar ist.

Durch die erfindungsgemäße Reifendruckregulierungseinrichtung wird beim Ablassen von Druckluft aus mehreren Radreifen gleichzeitig zum Absenken der Reifendrücke an den betreffenden Fahrzeugrädern eine effizientere Ausnutzung der Auslässe der Versorgungsventile erreicht. Dadurch, dass jedem Versorgungsventil jeweils ein Atmosphärenauslass zugeordnet ist und die Versorgungsventile seitenweise angeordnet sind, können im Falle der Entlüftung von zwei Radreifen an einer Fahrzeugachse beide Auslässe auf der rechten und linken Fahrzeugseite vorteilhaft gleichzeitig offen geschaltet sein. Im Gegensatz dazu würden herkömmliche Reifendruckregulierungseinrichtungen mit einer achsweisen Druckluftversorgung und achsweisen Entlüftung in diesem Fall nur einen Auslass nutzen können. Die Zeitdauer zur Reifendruckabsenkung an einer Fahrzeugachse lässt sich somit mit der erfindungsgemäßen Überkreuz-Anordnung im Vergleich halbieren.

Außerdem kann der Einfluss verschiedener Reifengrößen an den Fahrzeugachsen durch die pneumatische Verbindung zwischen Vorderrad und Hinterrad für jede Seite vorteilhaft eliminiert werden. Im Falle einer Entlüftung aller Radreifen von einem gleichen Druckniveau an allen Rädern auf ein neues Niveau, was ein häufig angeforderter Vorgang ist, werden beide Auslässe betrieben, also rechtsseitig und linksseitig, bis der angeforderte Reifendruck an allen Rädern eingestellt sind. Die Zeitdauer des Vorgangs kann auf einem Minimum gehalten werden, da beide Auslässe gleich lange genutzt werden. Im Gegensatz dazu würden herkömmliche Reifendruckregulierungseinrichtungen mit einer achsweisen Druckluftversorgung und achsweisen Entlüftung in diesem Fall die beiden Auslässe unterschiedlich lange nutzten, wodurch sich der Regulierungsvorgang zeitlich verlängern würde.

Bei Fahrzeugen mit einer hohen Achsenzahl, beispielsweise mit sechs oder acht Fahrzeugachsen, kann es vorteilhaft sein, auf jeder Fahrzeugseite jeweils zwei zusammenwirkende Versorgungsventile anzuordnen. Dadurch kann der Druckluftdurchsatz bei einer Reifendruckanhebung oder bei einer Reifendruckabsenkung erhöht werden, so dass auch bei einem vielachsigen Fahrzeug eine kurze Zeitdauer für diesen Regulierungsvorgang erreicht wird.

Gemäß einer anderen Weiterbildung der Erfindung ist vorgesehen, dass jeder Versorgungdruckleitung jeweils ein Reifendrucksensor und ein Reifendruckbegrenzungsventil zugeordnet sind.

Um eine Regulierung der Reifendrücke durchzuführen, müssen zunächst die aktuellen Reifendrücke erfasst werden beziehungsweise bekannt sein. Jede der beiden linksseitigen und rechtsseitigen Versorgungsdruckleitungen kann einen Drucksensor, die beispielsweise als piezoelektrische Sensoren mit pulsweitenmodulierten Ausgangssignalen ausgebildet sein können, aufweisen. Die Reifendruckmessung erfolgt dann achsweise, indem die Steuerventile schrittweise jeweils für eine Achse, beispielsweise zuerst für die Vorderräder, danach für die Hinterräder betätigt werden. Nach und nach werden die Radventile achsweise geöffnet, so dass jeweils für eine Achse der Reifendruck des linken Radreifens die linke Versorgungsleitung und der Reifendruck des rechten Radreifens die rechte Versorgungsdruckleitung füllt, sowie sich jeweils ein Druckausgleich zwischen dem Reifeninneren und der zugehörigen Versorgungsleitung einstellt. Der Reifendruck wird linksseitig und rechtsseitig mit dem linken beziehungsweise mit dem rechten Drucksensor gemessen. Die Druckmessung dauert nur wenige Sekunden pro Achse. Während der Druckmessung sind die Versorgungsventile geschlossen, damit keine Belüftungs- oder Entlüftungsvorgänge die Druckmessung beeinflussen können. Nach jeder Druckmessung werden die Versorgungsdruckleitungen zweckmäßigerweise durch einen kurzen Schaltimpuls der Versorgungsventile entlüftet, bevor der nächste Messvorgang beginnt.

Außerdem kann jede Versorgungsleitung ein mechanisches Druckbegrenzungsventil aufweisen, die beispielsweise als einfache mechanische Überdruckventile ausgebildet sein können. Dadurch wird sichergestellt, dass ein maximal zulässiger Reifendruck, selbst im Falle eines Ausfalls der elektronischen Steuereinheit, nicht überschritten wird. Ein Überdruck wird über das jeweilige Druckbegrenzungsventil abgebaut. Besonders vorteilhaft ist es, dass unabhängig von der Anzahl der Achsen des Fahrzeugs lediglich ein Drucksensor pro Fahrzeugseite und ein Druckbegrenzungsventil pro Fahrzeugseite erforderlich sind. Auch für Fahrzeuge mit mehr als zwei Achsen sind demnach nur zwei Drucksensoren und zwei Druckbegrenzungsventile erforderlich.

Gemäß einer anderen vorteilhaften Ausführungsform ist vorgesehen sein, dass die Reifendruckregulierungseinrichtung zur Durchführung folgende Funktionen ausgebildet ist:
a) Solldruckeinstellung mit Geländevorwahlmöglichkeit,
b) Drucküberwachung mit vorwählbarer Automatik und/oder auf Fahreranforderung,
c) Reifenpannenerkennung mit Warnanzeige, und
d) mechanischer Überdruckschutz.

Die Funktion der "Solldruckeinstellung" kann als ein komfortables Fahrerassistenzsystem fungieren. Demnach kann der Fahrer an einer Bedieneinheit aus einer Liste von Programmen ein für die aktuelle Betriebssituation des Fahrzeugs passendes Programm auswählen und anfordern. In dem Programm ist ein dazu passender Reifendruck hinterlegt, der noch von vorgegebenen Parametern des Fahrzeugs abhängig sein kann. Der Reifendruck kann beispielsweise aus einem Kennfeld oder aus einer Kennlinie ausgelesen werden. Die elektronische Steuereinheit stellt an den Fahrzeugrädern den oder die vorgesehenen Drücke ein, wobei bei unterschiedlichen Drücken die Einstellungen sequentiell erfolgen.

Die Funktion der "Drucküberwachung" kann vorteilhaft auf verschiedene Modi zurückgreifen. Möglich sind beispielsweise Druckerfassungen in programmierbaren vorgegebenen Überwachungszyklen mit festen Intervallen. Bei Erkennen bestimmter Ereignisse oder Situationen kann eine außerplanmäßige Druckerfassung ausgelöst werden. Zudem kann der Fahrer jederzeit eine Druckerfassung manuell anfordern.

Die Funktion der "Reifenpannenerkennung" erhöht die Sicherheit des Fahrzeugs im Fahrbetrieb. Demnach kann ein Warnsignal ausgegeben werden, wenn ein Druckabfall an einem oder mehreren Fahrzeugrädern erfasst wird. Beispielsweise kann vorab ein Toleranzfenster vorgegeben werden, innerhalb dessen Druckabweichungen von dem aktuell eingestellten Sollwert erlaubt sind. Wird ein vorgegebener Schwellwert unterschritten, wird eine Warnung "Niedriger Reifendruck" erzeugt und dem Fahrer angezeigt. Dem kann eine automatische Prüfroutine folgen, innerhalb der probehalber alle oder einzelnen Radreifen belüftet werden. Steigt der Reifendruck an dem oder den betreffenden Radreifen innerhalb eines vorgegebenen Zeitraumes nicht oder nicht ausreichend an, wird eine zweite Warnung "Reifenpanne" angezeigt.

Die Funktion "mechanischer Überdruckschutz" sorgt wie bereits erwähnt mittels eines Druckbegrenzungsventils dafür, dass ein sicherheitskritischer maximaler Reifendruck nicht überschritten werden kann.

Außerdem kann vorgesehen sein, dass eine Fehlererkennung in die Reifendruckregulierungseinrichtung implementiert ist, durch die beim Erkennen eines Ausfalls oder einer Fehlfunktion der elektronischen Steuereinheit ein Warnsignal erzeugt und angezeigt werden kann.

Durch die genannten Funktionen Reifenpannenerkennung, Überdruckschutz und die elektronische Fehlererkennung wird eine hohe Betriebssicherheit der hier vorgestellten neuen Reifendruckregulierungseinrichtung gewährleistet. Der Fahrer ist daher jederzeit über die Funktionsbereitschaft des Systems informierbar.

Die erfindungsgemäße Reifendruckregulierungseinrichtung kann vorteilhaft relativ einfach an verschiedene mehrachsige Fahrzeuge angepasst werden. Für verschiedene Achszahlen kann vorgesehen sein, dass die elektronische Steuereinheit als eine 2-Kanal-, 4-Kanal-, 6-Kanal-, 8-Kanal-, 10-Kanal-, 12-Kanal-, 14-Kanal- oder 16-Kanal-Steuerung für eine, zwei, drei, vier, fünf, sechs, sieben oder acht Fahrzeugachsen ausgebildet ist. Die Anzahl der Kanäle bezieht sich hier auf die Zahl der Fahrzeugräder, deren Reifendruck zu regulieren ist. Für jede Fahrzeugachse sind demnach zwei Schnittstellen zur Ansteuerung jeweils zweier Steuerventile vorgesehen. Außerdem können mittels der Steuereinheit zumindest zwei Versorgungsventile unabhängig von der Anzahl der Fahrzeugachsen angesteuert werden. Dafür sind entsprechend mindestens zwei weitere Schnittstellen vorgesehen.

Darüber hinaus ist es auch möglich, zwei oder mehr Reifendruckregulierungseinrichtungen vorteilhaft miteinander zu kombinieren. Gemäß einer weiteren Ausführungsform der Erfindung kann daher vorgesehen sein, dass für eine Reifendruckregulierung an einem sechsachsigen beziehungsweise an einem achtachsigen Fahrzeug zwei als 6-Kanalsteuerungen ausgebildete Steuereinheiten beziehungsweise zwei als 8-Kanalsteuerungen ausgebildete Steuereinheiten angeordnet sind, wobei die zwei betreffenden Steuereinheiten über einen CAN-Bus funktional miteinander verbunden und mittels einer gemeinsamen Bedieneinheit bedienbar sind.

An dieser Stelle sei darauf hingewiesen, dass, wenn von einem Fahrzeugrad die Rede ist, es sich hierbei nicht nur um eine Einzelbereifung, sondern auch um ein Fahrzeugrad mit einer Doppelbereifung (Zwillingsreifen) handeln kann, die von den Steuerdruckventilen und Versorgungsventilen der Reifendruckregulierungseinrichtung angesteuert und überwacht werden können.

Schließlich betrifft die Erfindung auch ein Off-Highway-Fahrzeug, wie ein landwirtschaftlicher Traktor, ein Baufahrzeug, ein Militärfahrzeug, ein Spezialfahrzeug oder ein Lastwagen, als Einzelfahrzeug oder als Zugfahrzeug-Anhängefahrzeug-Kombination, mit einer Reifendruckregulierungseinrichtung, welche die Merkmale von wenigstens einem der Vorrichtungsansprüche aufweist.

Die Erfindung wird nachstehend anhand von zwei in der beigefügten Zeichnung dargestellten Ausführungsbeispielen näher erläutert. In der Zeichnung zeigt
Fig. 1 eine erste Ausführungsform einer erfindungsgemäßen Reifendruckregulierungseinrichtung in einer schematischen Darstellung,
Fig. 2 eine zweite Ausführungsform einer erfindungsgemäßen Reifendruckregulierungseinrichtung in einer schematischen Darstellung, und
Fig. 3 eine Reifendruckregulierungseinrichtung gemäß dem Stand der Technik in einer schematischen Übersichtsdarstellung.

Einige Bauelemente in den Figuren stimmen überein, so dass sie mit denselben Bezugsziffern bezeichnet sind. Zur besseren Unterscheidung ist allen pneumatischen Versorgungsdruckleitungen ein Präfix "V", allen pneumatischen Steuerdruckleitungen ein Präfix "S", allen sonstigen pneumatischen Leitungen ein Präfix "P" und allen elektrischen Leitungen ein Präfix "E" vorangestellt.

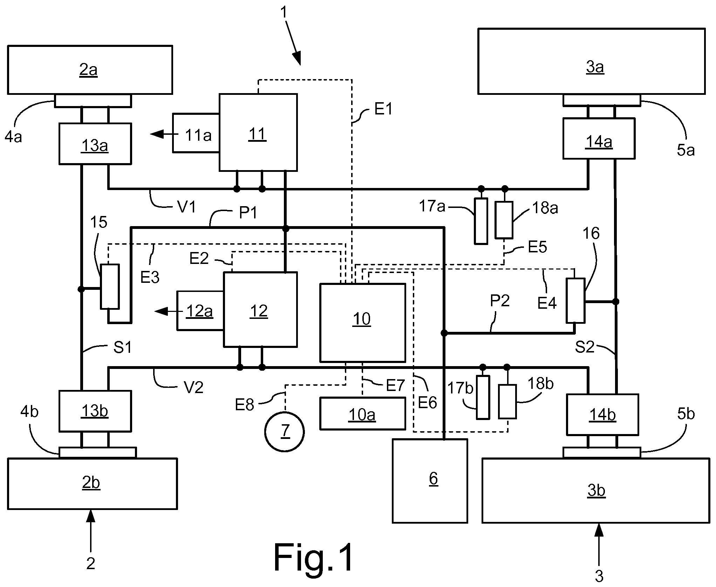

Eine in Fig. 3 dargestellte Reifendruckregulierungseinrichtung 1' gemäß dem Stand der Technik ist bereits eingangs beschrieben worden. Im Unterschied zu dieser bekannten Reifendruckregulierungseinrichtung 1' weist eine in Fig. 1 dargestellte erfindungsgemäße Reifendruckregulierungseinrichtung 1 zunächst eine erste Versorgungsdruckleitung V1 auf, welche das Radventil 4a des rechten vorderen Fahrzeugrads 2a mit dem Radventil 5a des rechten hinteren Fahrzeugrades 3a pneumatisch verbindet. Außerdem weist sie eine zweite Versorgungsdruckleitung V2 auf, welche das Radventil 4b des linken vorderen Fahrzeugrads 2b mit dem Radventil 5b des linken hinteren Fahrzeugrades 3b pneumatisch verbindet. Die Druckluftversorgung erfolgt demnach gemäß der Erfindung seitenweise anstelle achsweise wie bei den herkömmlichen Einrichtungen.

Außerdem sind eine erste Steuerdruckleitung S1, welche die zwei Radventile 4a, 4b der zwei vorderen Fahrzeugräder 2a, 2b pneumatisch miteinander verbindet, sowie eine zweite Steuerdruckleitung S2, welche die zwei Radventile 5a, 5b der zwei hinteren Fahrzeugräder 3a, 3b pneumatisch miteinander verbindet, angeordnet. Diese beiden Steuerdruckleitungen S1, S2 sind über eine erste Leitung P1 beziehungsweise über eine zweite pneumatische Leitung P2 mit der Druckluftversorgungseinrichtung 6 des Fahrzeugs pneumatisch verbunden. Die Betätigung der Radventile 4a, 4b, 5a, 5b des Fahrzeugs durch den Steuerdruck erfolgt demnach gemäß der Erfindung achsweise anstatt für jedes Fahrzeugrad 2a, 2b, 3a, 3b einzeln, wie noch beschrieben wird.

In der ersten Versorgungsdruckleitung V1 ist ein erstes Versorgungsventil 11 angeordnet, welches zwei Anschlüsse zur wahlweisen Belüftung der ersten Versorgungsdruckleitung V1 aus der Druckluftversorgungseinrichtung 6 beziehungsweise zur Entlüftung der ersten Versorgungsdruckleitung V1 über einen ersten Auslass 11a an die Atmosphäre aufweist. In der zweiten Versorgungsdruckleitung V2 ist ein zweites Versorgungsventil 12 angeordnet, welches ebenfalls zwei Anschlüsse zur wahlweisen Belüftung der zweiten Versorgungsdruckleitung V2 aus der Druckluftversorgungseinrichtung 6 beziehungsweise zur Entlüftung der zweiten Versorgungsdruckleitung V2 über einen zweiten Auslass 12a an die Atmosphäre aufweist. Die beiden Versorgungsventile 11, 12 sind als elektromagnetische Wegeventile ausgebildet, die über eine erste beziehungsweise zweite elektrische Leitung E1, E2 mit einer elektronischen Steuereinheit 10 elektrisch verbunden sind und durch diese elektrisch betätigt werden.

Die Versorgungsventile 11, 12 weisen vorzugsweise jeweils drei Schaltstellungen auf, nämlich eine erste Schaltstellung zur Belüftung, eine zweite Schaltstellung zur Entlüftung, und eine dritte Schaltstellung zur Absperrung der zugeordneten Versorgungsdruckleitung V1, V2 gegenüber dem Auslass 11a, 12a sowie gegenüber der Druckluftversorgungseinrichtung 6. In der dritten Schaltstellung bleiben die pneumatischen Verbindungen der Radventile 4a, 4b, 5a, 5b der jeweiligen Fahrzeugseite untereinander offen, die Versorgungsdruckleitung V1, V2 wird also nicht pneumatisch unterbrochen.

In der ersten pneumatischen Leitung P1 zur Verbindung der ersten Steuerdruckleitung S1 mit der Druckluftversorgungseinrichtung 6 ist ein erstes Steuerventil 15 angeordnet, welches eingangsseitig an die Druckluftversorgungseinrichtung 6 und ausgangsseitig an die erste Steuerdruckleitung S1 angeschlossen ist. Das erste Steuerventil 15 ist über eine dritte elektrische Leitung E3 mit der elektronischen Steuereinheit 10 elektrisch verbunden und ist von dieser ansteuerbar. In der zweiten pneumatischen Leitung P2 zur Verbindung der zweiten Steuerdruckleitung S2 mit der Druckluftversorgungseinrichtung 6 ist ein zweites Steuerventil 16 angeordnet, welches eingangsseitig an die Druckluftversorgungseinrichtung 6 und ausgangsseitig an die zweite Steuerdruckleitung S2 angeschlossen ist. Das zweite Steuerventil 16 ist über eine vierte elektrische Leitung E4 mit der elektronischen Steuereinheit 10 elektrisch verbunden und von dieser ansteuerbar. Die beiden Steuerventile 15, 16 weisen vorzugsweise jeweils zwei Schaltstellungen auf, nämlich eine erste Schaltstellung zum Belüften und eine zweite Schaltstellung zum Absperren der beiden Steuerdruckleitung S1, S2. Eine zentrale Steuerventileinheit ist nicht vorgesehen und auch nicht erforderlich.

Außerdem ist an die erste Versorgungsdruckleitung V1 ein erstes Druckbegrenzungsventil 17a und einen ersten Drucksensor 18a angeschlossen. Der erste Drucksensor 18a ist über eine fünfte elektrische Leitung E5 mit der elektronischen Steuereinheit 10 verbunden. Entsprechend ist an die zweite Versorgungsdruckleitung V2 ein zweites Druckbegrenzungsventil 17b und einen zweiten Drucksensor 18b angeschlossen. Der zweite Drucksensor 18b ist über eine sechste elektrische Leitung E6 mit der elektronischen Steuereinheit 10 verbunden.

Mittels der Druckbegrenzungsventile 17a, 17b ist sichergestellt, dass ein maximal zulässiger Reifenfülldruck nicht überschritten werden kann. Dies gilt sowohl für Fälle mechanischer Defekte an den Steuerventilen 15, 16 und/oder an den Versorgungsventilen 11, 12, als auch im Falle einer fehlerhaft arbeitenden oder ausgefallenen elektronischen Steuereinheit 10. Die Drucksensoren 18a, 18b dienen zur Erfassung der Reifendrücke und stellen diese als Messwerte der Steuereinheit 10 zur Reifendruckregulierung zur Verfügung.

An die elektronische Steuereinheit 10 ist über eine siebte elektrische Leitung E7 eine manuell zu betätigende Bedieneinheit 10a angeschlossen. Die elektronische Steuereinheit 10 ist zudem über eine elektrische Leitung E8 mit der Spannungsversorgung 7 verbunden. An der Bedieneinheit 10a können erfasste Reifendrucke der Fahrzeugräder 2a, 2b, 3a, 3b angezeigt und gewünschte Reifendrücke eingestellt sowie automatische Programme zur Druckerfassung und zur Druckregulierung angewählt werden.

Das erste Steuerventil 15 betätigt in seiner ersten Schaltstellung das erste Radventil 4a und das zweite Radventil 4b der beiden Fahrzeugräder 2a, 2b der ersten Fahrzeugachse 2, hier der Vorderachse. Das zweite Steuerventil 16 betätigt in seiner ersten Schaltstellung das dritte und das vierte Radventil 5a, 5b der beiden Fahrzeugräder 3a, 3b der zweiten Fahrzeugachse 3, hier der Hinterachse. Das erste Versorgungsventil 11 stellt in seiner ersten Schaltstellung den Versorgungsdruck allen Fahrzeugrädern 2a, 3a der rechten Fahrzeugseite, hier dem rechten Vorderrad und dem rechten Hinterrad, zur Verfügung. In der zweiten Schaltstellung des ersten Versorgungsventils 11 wird der erste Auslass 11a zum Entlüften geöffnet. In der dritten Schaltstellung des ersten Versorgungsventils 11 wird über die erste Versorgungsdruckleitung V1 dem ersten Drucksensor 18a der aktuelle Reifendruck des rechten Vorderrades 2a oder des rechten Hinterrades 3a zugeführt, je nachdem welches der beiden zugehörigen Radventile 4a, 5a aktuell geschaltet ist.

Dem entsprechend stellt das zweite Versorgungsventil 12 in seiner ersten Schaltstellung den Versorgungsdruck allen Fahrzeugrädern 2b, 3b der linken Fahrzeugseite, hier dem linken Vorderrad 2b und dem linken Hinterrad 3b, zur Verfügung. In der zweiten Schaltstellung des zweiten Versorgungsventils 12 wird der zweite Auslass 12a zum Entlüften zur Verfügung geöffnet. In der dritten Schaltstellung des zweiten Versorgungsventils 12 wird der aktuelle Reifendruck des linken Vorderrades 2b oder des linken Hinterrades 3b dem zweiten Drucksensor 18b zugeführt, je nachdem welches der beiden zugehörigen Radventile 4b, 5b aktuell geschaltet ist.

Die Überkreuz-Anordnung der beiden Steuerdruckleitungen S1, S2 und der beiden Versorgungsdruckleitungen V1, V2 der Reifendruckregulierungseinrichtung 1 gemäß Fig. 1 ermöglicht im Zusammenspiel mit den möglichen Schaltstellungen der Steuerventile 15, 16 und der Versorgungsventile 11, 12 eine Reifendruckerhöhung oder eine Reifendruckverringerung wahlweise an einzelnen Fahrzeugrädern 2a, 2b, 3a, 3b, an einzelnen Fahrzeugachsen 2, 3 oder an allen Fahrzeugrädern 2a, 2b, 3a, 3b gleichzeitig. Die Reifendruckmessung erfolgt zweckmäßigerweise jeweils mit beiden Versorgungsventilen 11, 12 an den Fahrzeugachsen 2, 3 Achse für Achse nacheinander.

So wird beispielsweise zur Anhebung des Reifendrucks des rechten Vorderrades 2a das der ersten Fahrzeugachse 2 zugehörige erste Steuerventil 15 durch die elektronische Steuereinheit 10 in seine Durchlassstellung geschaltet. Dadurch werden die beiden Radventile 4a, 4b der beiden vorderen Fahrzeugräder 2a, 2b über die erste Steuerdruckleitung S1 mit Druckluft von der Druckluftversorgungseinrichtung 6 pneumatisch beaufschlagt und geöffnet. Gleichzeitig wird nur das der rechten Fahrzeugseite zugeordnete erste Versorgungsventil 11 durch die Steuereinheit 10 angesteuert, so dass Druckluft aus der Druckluftversorgungseinrichtung 6 über die erste Versorgungsruckleitung V1 in den Radreifen des betreffenden Fahrzeugrades 2a einströmt. Das linke Fahrzeugrad 2b erfährt derweil einen vernachlässigbar geringen Druckverlust.

Soll gleichzeitig auch der Druck an dem linken Fahrzeugrad 2b angehoben werden, also an der vorderen Fahrzeugachse 2 insgesamt, wird auch das der linken Fahrzeugseite zugehörige zweite Versorgungsventil 12 angesteuert und in seine Durchlassstellung geschaltet.

Soll der Reifendruck an beiden Fahrzeugachsen 2, 3 angehoben werden, so wird zusätzlich das der zweiten Fahrzeugachse 3 zugeordnete zweite Steuerventil 16 betätigt. Eine Absenkung des Reifendrucks erfolgt in gleicher Weise, wobei die Versorgungsventile 11, 12 auf die Öffnung der zugehörigen Auslässe 11a, 12a umgeschaltet werden.

Eine Druckanhebung oder Druckabsenkung an einzelnen oder allen Fahrzeugachsen 2, 3 oder an einzelnen Fahrzeugrädern 2q, 2b, 3a, 3b kann durch den Fahrer an der Bedieneinheit 10a manuell eingegeben werden. Der Fahrer kann auch ein Programm auswählen und starten, welches für eine bestimmte Geländeart eine in einem Kennfeld hinterlegte Einstellung automatisch durchführt. Außerdem kann jederzeit eine manuelle Reifendruckmessung angefordert werden oder eine automatische Druckmessung und Drucküberwachung in vorgegeben Zyklen erfolgen. Die Drucküberwachung kann auch eine Pannenerkennungsfunktion enthalten, die unerwartete Druckabweichungen von einem vorgegebenen Solldruckwert außerhalb eines festgelegten Toleranzfensters erfasst und signalisiert. Mithilfe einer Prüfroutine, innerhalb der probehalber alle oder einzelnen Radreifen temporär belüftet werden und anschließend der zeitliche Reifendruckverlauf erfasst wird, kann ein niedriger Reifendruck oder eine Reifenpanne erkannt und an der Bedieneinheit 10a dem Fahrer angezeigt werden.

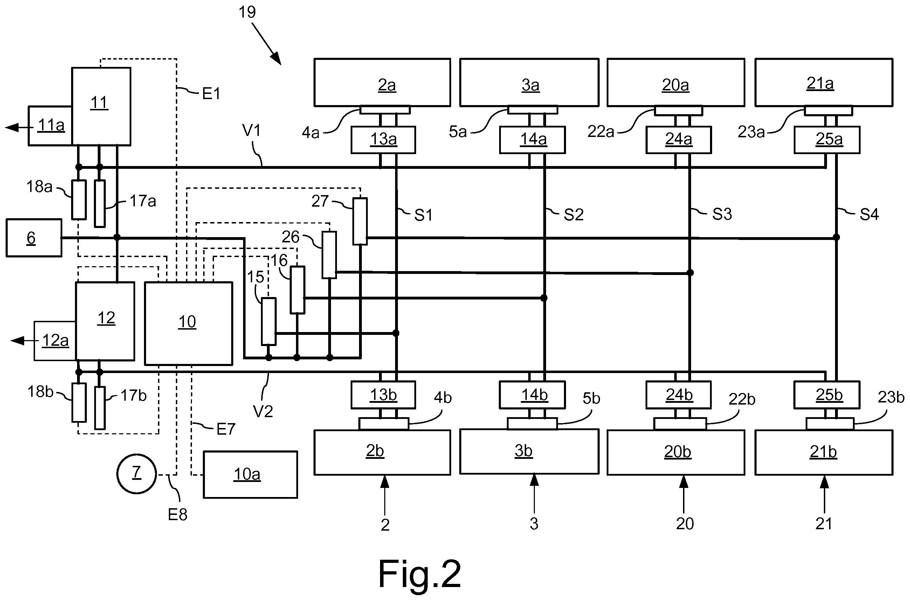

Fig. 2 zeigt eine zweite Ausführungsform einer erfindungsgemäßen Reifendruckregulierungseinrichtung 19 für ein Fahrzeug mit vier Fahrzeugachsen 2, 3, 20, 21 und acht Fahrzeugrädern 2a, 2b, 3a, 3b, 20a, 20b, 21a, 21b. Der Aufbau dieser Reifendruckregulierungseinrichtung 19 entspricht im Wesentlichen der Struktur der Reifendruckregulierungseinrichtung 1 gemäß Fig. 1, jedoch mit einer Erweiterung für die zusätzliche dritte und vierte Fahrzeugachse 20, 21. Die elektrischen Verbindungsleitungen sowie mehrere pneumatische Verzweigungen sind hier zwar nicht alle mit Bezugszeichen versehen, aber durch gestrichelte beziehungsweise verstärkte Linien gut zu unterscheiden und nach der Betrachtung des Ausführungsbeispiels gemäß Fig. 1 auch einfach zuzuordnen.

Demnach weist die dritte Fahrzeugachse 20 ein fünftes Fahrzeugrad 20a mit einem fünften Radventil 22a und einem fünften Drehübertrager 24a sowie ein sechstes Fahrzeugrad 20b mit einem sechsten Radventil 22b und einem sechsten Drehübertrager 24b auf. Die fünften und sechsten Radventile 22a, 22b sind durch eine dritte Steuerdruckleitung S3 pneumatisch miteinander verbunden. An die dritte Steuerdruckleitung S3 pneumatisch angeschlossen ist ein drittes Steuerventil 26, welches von der elektronischen Steuereinheit 10 ansteuerbar ist. Durch Schalten des dritten Steuerventils 26 werden die beiden Radventile 22a, 22b pneumatisch geöffnet beziehungsweise geschlossen.

Außerdem weist die vierte Fahrzeugachse 21 ein siebtes Fahrzeugrad 21a mit einem siebten Radventil 23a und einem siebten Drehübertrager 25a sowie ein achtes Fahrzeugrad 21b mit einem achten Radventil 23b und einem achten Drehübertrager 25b auf. Die siebten und achten Radventile 23a, 23b sind durch eine vierte Steuerdruckleitung S4 pneumatisch miteinander verbunden. An diese vierte Steuerdruckleitung S4 pneumatisch angeschlossen ist ein viertes Steuerventil 27, welches von der elektronischen Steuereinheit 10 ansteuerbar ist. Durch Schalten des Steuerventils 27 werden die beiden Radventile 23a, 23b pneumatisch geöffnet beziehungsweise geschlossen.

Durch Schalten der beiden Versorgungsventile 11, 12 strömt je nach Schaltstellung der Versorgungsventile 11, 12 und der Steuerventile 15, 16, 26, 27 Druckluft in die Radreifen der betreffenden Fahrzeugräder 2a, 2b, 3a, 3b, 20a, 20b, 21a, 21b zur Druckerhöhung oder zur Druckabsenkung aus den Radreifen heraus zu den Auslässen 11a, 12a.

Die Reifendruckregulierungseinrichtung 19 gemäß Fig. 2 kann auf einfache Weise für ein Fahrzeug mit einer höheren Anzahl von Fahrzeugachsen erweitert oder für ein Fahrzeug mit einer geringeren Anzahl von Fahrzeugachsen reduziert werden. Für eine Erweiterung ist je zusätzlicher Achse lediglich eine zusätzliche Steuerdruckleitung mit einem zusätzlichen Steuerventil erforderlich. Die elektronische Steuereinheit 10 muss entsprechend viele noch freie Kanäle beziehungsweise Schnittstellen aufweisen. Zusätzliche Versorgungsventile, Drucksensoren und Druckbegrenzungsventile sind nicht erforderlich, aber möglich. Für eine Verringerung entfallen je weggelassener Achse eine Steuerdruckleitung und ein Steuerventil.

Es ist auch möglich, zwei oder mehr als zwei Reifendruckregulierungseinrichtungen gemäß Fig. 1 oder gemäß Fig. 2 miteinander zu kombinieren. Dies kann beispielsweise über eine CAN-Bus-Verbindung und eine gemeinsame Bedieneinheit 10a für mehrere Reifendruckregulierungseinrichtungen 1, 19 realisiert werden. In diesem Fall können zwei oder mehr als zwei Reifendruckregulierungseinrichtungen 1, 19 in einem sogenannten Master/Slave-Verbund miteinander kommunizieren und beispielsweise eine sechsachsige oder achtachsige Reifendruckregulierungseinrichtung zusammen bilden.

### Bezugszeichenliste (Teil der Beschreibung)

- 1: Reifendruckregulierungseinrichtung (1. Ausführungsform)
- 1': Reifendruckregulierungseinrichtung (Stand der Technik)
- 2: Erste Fahrzeugachse
- 2a: Erstes Fahrzeugrad
- 2b: Zweites Fahrzeugrad
- 3: Zweite Fahrzeugachse
- 3a: Drittes Fahrzeugrad
- 3b: Viertes Fahrzeugrad
- 4a: Erstes Radventil
- 4b: Zweites Radventil
- 5a: Drittes Radventil
- 5b: Viertes Radventil
- 6: Druckluftversorgungseinrichtung
- 7: Spannungsversorgung
- 9': Zentrale Steuerventileinrichtung (Stand der Technik)
- 10: Elektronische Steuereinheit
- 10': Elektronische Steuereinheit (Stand der Technik)
- 10a: Bedieneinheit der Steuereinheit
- 10a': Bedieneinheit der Steuereinheit (Stand der Technik)
- 11: Erstes Versorgungsventil
- 11': Erstes Versorgungsventil (Stand der Technik)
- 11a: Auslass des ersten Versorgungsventils
- 11a': Auslass des ersten Versorgungsventils (Stand der Technik)
- 12: Zweites Versorgungsventil
- 12': Zweites Versorgungsventil (Stand der Technik)
- 12a: Auslass des zweiten Versorgungsventils
- 12a': Auslass des zweiten Versorgungsventils (Stand der Technik)
- 13a: Erster Drehübertrager
- 13b: Zweiter Drehübertrager
- 14a: Dritter Drehübertrager
- 14b: Vierter Drehübertrager
- 15: Erstes Steuerventil
- 16: Zweites Steuerventil
- 17a: Erstes Reifendruckbegrenzungsventil
- 17b: Zweites Reifendruckbegrenzungsventil
- 18a: Erster Reifendrucksensor
- 18b: Zweiter Reifendrucksensor
- 19: Reifendruckregulierungseinrichtung (2. Ausführungsform)
- 20: Dritte Fahrzeugachse (2. Ausführungsform)
- 20a: Fünftes Fahrzeugrad (2. Ausführungsform)
- 20b: Sechstes Fahrzeugrad (2. Ausführungsform)
- 21: Vierte Fahrzeugachse (2. Ausführungsform)
- 21a: Siebtes Fahrzeugrad (2. Ausführungsform)
- 21b: Achtes Fahrzeugrad (2. Ausführungsform)
- 22a: Fünftes Radventil (2. Ausführungsform)
- 22b: Sechstes Radventil (2. Ausführungsform)
- 23a: Siebtes Radventil (2. Ausführungsform)
- 23b: Achtes Radventil (2. Ausführungsform)
- 24a: Fünfter Drehübertrager (2. Ausführungsform)
- 24b: Sechster Drehübertrager (2. Ausführungsform)
- 25a: Siebter Drehübertrager (2. Ausführungsform)
- 25b: Achter Drehübertrager (2. Ausführungsform)
- 26: Drittes Steuerventil (2. Ausführungsform)
- 27: Viertes Steuerventil (2. Ausführungsform)
- E1: Erste elektrische Leitung
- E2: Zweite elektrische Leitung
- E3: Dritte elektrische Leitung
- E4: Vierte elektrische Leitung
- E5: Fünfte elektrische Leitung
- E6: Sechste elektrische Leitung
- E7: Siebte elektrische Leitung
- E8: Achte elektrische Leitung
- P1: Erste pneumatische Leitung
- P1': Erste pneumatische Leitung (Stand der Technik)
- P2: Zweite pneumatische Leitung
- P2': Zweite pneumatische Leitung (Stand der Technik)
- S1: Erste Steuerdruckleitung
- S1a': Erste Steuerdruckleitung (Stand der Technik)
- S1b': Zweite Steuerdruckleitung (Stand der Technik)
- S2: Zweite Steuerdruckleitung
- S2a': Dritte Steuerdruckleitung (Stand der Technik)
- S2b': Vierte Steuerdruckleitung (Stand der Technik)
- S3: Dritte Steuerdruckleitung (2.Ausführungsform)
- S4: Vierte Steuerdruckleitung (2. Ausführungsform)
- V1: Erste Versorgungsdruckleitung
- V1': Erste Versorgungsdruckleitung (Stand der Technik)
- V2: Zweite Versorgungsdruckleitung
- V2': Zweite Versorgungsdruckleitung (Stand der Technik)

## Patentansprüche

1. Reifendruckregulierungseinrichtung (1, 19) eines luftbereiften Off-Highway-Fahrzeugs, mittels der die Reifendrücke der Fahrzeugräder (2a, 2b, 3a, 3b, 20a, 20b, 21a, 21b) mindestens einer Fahrzeugachse (2, 3, 20, 21) des Fahrzeugs während der Fahrt oder während eines Arbeitseinsatzes veränderbar sind, wobei jedes luftbereifte Fahrzeugrad (2a, 2b, 3a, 3b, 20a, 20b, 21a, 21b) ein druckgesteuertes Radventil (4a, 4b, 5a, 5b, 22a, 22b, 23a, 23b) aufweist, welches mit einer Steuerdruckleitung (S1, S2, S3, S4) und mit einer Versorgungsdruckleitung (V1, V2) pneumatisch verbunden ist, wobei den Steuerdruckleitungen (S1, S2, S3, S4) und den Versorgungsdruckleitungen (V1, V2) Ventilmittel (11, 12, 15, 16, 26, 27) zugeordnet sind, welche mit einer Druckluftversorgungseinrichtung (6) des Fahrzeugs pneumatisch verbunden oder verbindbar sind und durch eine elektronische Steuereinheit (10) ansteuerbar sind, um bedarfsweise die Radventile (4a, 4b, 5a, 5b, 22a, 22b, 23a, 23b) eines oder mehrerer der Fahrzeugräder (2a, 2b, 3a, 3b, 20a, 20b, 21a, 21b) zu betätigen und deren Reifendrücke zu regulieren, **dadurch gekennzeichnet, dass** jeder der in die Reifendruckregulierungseinrichtung (1, 19) einbezogenen Fahrzeugachsen (2, 3, 20, 21) des Fahrzeugs jeweils eine Steuerdruckleitung (S1, S2, S3, S4) mit jeweils einem Steuerventil (15, 16, 26, 27) zugeordnet ist, so dass die Betätigung der Radventile (4a, 4b, 5a, 5b, 22a, 22b, 23a, 23b) der Fahrzeugräder (2a, 2b, 3a, 3b, 20a, 20b, 21a, 21b) des Fahrzeugs über die Steuerventile (15, 16, 26, 27) achsweise erfolgt, und dass jeder der beiden linken und rechten Fahrzeugseiten des Fahrzeugs jeweils eine Versorgungsdruckleitung (V1, V2) mit jeweils mindestens einem Versorgungsventil (11, 12) zugeordnet ist, so dass die Druckluftversorgung der Fahrzeugräder (2a, 2b, 3a, 3b, 20a, 20b, 21a, 21b) des Fahrzeugs über die Versorgungsventile (11, 12) seitenweise erfolgt.

2. Reifendruckregulierungseinrichtung nach Anspruch 1, **dadurch gekennzeichnet, dass** die jeweiligen Steuerventile (15, 16, 26, 27) zwei Schaltstellungen aufweisen, wobei in einer ersten Schaltstellung des Steuerventils (15, 16, 26, 27) die an die zugehörige Steuerdruckleitung (S1, S2, S3, S4) angeschlossenen Radventile (4a, 4b, 5a, 5b, 22a, 22b, 23a, 23b) der Fahrzeugräder (2a, 2b, 3a, 3b,20a, 20b, 21a, 21b) der betreffenden Fahrzeugachse mit der Druckluftversorgungseinrichtung (6) des Fahrzeugs pneumatisch verbunden und in einer zweiten Schaltstellung von dieser abgesperrt sind, und dass die jeweiligen Versorgungsventile (11, 12) drei Schaltstellungen aufweisen, wobei in einer ersten Schaltstellung des Versorgungsventils (11, 12) die an die zugehörige Versorgungsdruckleitung (V1, V2) angeschlossenen Radventile (4a, 4b, 5a, 5b, 22a, 22b, 23a, 23b) der Fahrzeugräder (2a, 2b, 3a, 3b, 20a, 20b, 21a, 21b) der betreffenden Fahrzeugseite mit der Druckluftversorgungseinrichtung (6) verbunden sind, in einer zweiten Schaltstellung mit einem Auslass (11a, 12a) verbunden sind, und in einer dritten Schaltstellung von der Druckluftversorgungseinrichtung (6) und von dem Auslass (11a, 12a) abgesperrt sind.

3. Reifendruckregulierungseinrichtung nach Anspruch 1 oder 2, **dadurch gekennzeichnet, dass** jedem Versorgungsventil (11, 12) jeweils ein Auslass (11a, 12a) zugeordnet ist, so dass eine gleichzeitige Druckabsenkung an mehreren Fahrzeugrädern (2a, 2b, 3a, 3b, 20a, 20b, 21a, 21b) mehrerer Fahrzeugachsen (2, 3, 20, 21) fahrzeugseitenweise ansteuerbar ist.

4. Reifendruckregulierungseinrichtung nach einem der Ansprüche 1 bis 3, **dadurch gekennzeichnet, dass** jeder Versorgungdruckleitung (V1, V2) jeweils ein Reifendrucksensor (18a, 18b) zugeordnet ist.

5. Reifendruckregulierungseinrichtung nach einem der Ansprüche 1 bis 4, **dadurch gekennzeichnet, dass** jeder Versorgungdruckleitung (V1, V2) jeweils ein Reifendruckbegrenzungsventil (17a, 17b) zugeordnet ist.

6. Reifendruckregulierungseinrichtung nach einem der Ansprüche 1 bis 5, **dadurch gekennzeichnet, dass** die Reifendruckregulierungseinrichtung (1, 19) zur Durchführung folgende Funktionen ausgebildet ist:
a) Solldruckeinstellung mit Geländevorwahlmöglichkeit,
b) Drucküberwachung mit vorwählbarer Automatik und/oder auf Fahreranforderung,
c) Reifenpannenerkennung mit Warnanzeige,
d) mechanischer Überdruckschutz.

7. Reifendruckregulierungseinrichtung nach einem der Ansprüche 1 bis 6, **dadurch gekennzeichnet, dass** eine Fehlererkennungsfunktion in die Reifendruckregulierungseinrichtung (1, 19) implementiert ist, durch die beim Erkennen eines Ausfalls oder einer Fehlfunktion der elektronischen Steuereinheit (10) ein Warnsignal erzeugbar und anzeigbar ist.

8. Reifendruckregulierungseinrichtung nach einem der Ansprüche 1 bis 7, **dadurch gekennzeichnet, dass** die elektronische Steuereinheit (10) als eine 2-Kanal-, 4-Kanal-, 6-Kanal-, 8-Kanal-, 10-Kanal-, 12-Kanal-, 14-Kanal- oder 16-Kanal-Steuerung für eine, zwei, drei, vier, fünf, sechs, sieben oder acht Fahrzeugachsen (2, 3, 20, 21) ausgebildet ist.

9. Reifendruckregulierungseinrichtung nach einem der Ansprüche 1 bis 8, **dadurch gekennzeichnet, dass** für eine Reifendruckregulierung an einem sechsachsigen beziehungsweise an einem achtachsigen Fahrzeug zwei als 6-Kanalsteuerungen ausgebildete Steuereinheiten beziehungsweise zwei als 8-Kanalsteuerungen ausgebildete Steuereinheiten (10) angeordnet sind, wobei die zwei betreffenden Steuereinheiten (10) über einen CAN-Bus funktional miteinander verbunden und mittels einer gemeinsamen Bedieneinheit (10a) bedienbar sind.

10. Off-Highway-Fahrzeug, wie ein landwirtschaftlicher Traktor, ein Baufahrzeug, ein Militärfahrzeug, ein Spezialfahrzeug oder ein Lastwagen, als Einzelfahrzeug oder als Zugfahrzeug-Anhängefahrzeug-Kombination, mit einer Reifendruckregulierungseinrichtung (1, 19), welche gemäß einem der Vorrichtungsansprüche aufgebaut ist.

## Claims

1. A tire pressure control device (1, 19) of an off-highway vehicle having pneumatic tires, by means of which the tire pressures of the vehicle wheels (2a, 2b, 3a, 3b, 20a, 20b, 21a, 21b) of at least one vehicle axle (2, 3, 20, 21) of the vehicle can be changed during travel or during a work use, wherein each pneumatic tire vehicle wheel (2a, 2b, 3a, 3b, 20a, 20b, 21a, 21b) has a pressure-controlled wheel valve (4a, 4b, 5a, 5b, 22a, 22b, 23a, 23b), which is pneumatically connected to a control pressure line (S1, S2, S3, S4) and to a supply pressure line (V1, V2), wherein the control pressure lines (S1, S2, S3, S4) and the supply pressure lines (V1, V2) are assigned valve means (11, 12, 15, 16, 26, 27), which are pneumatically connected or connectable to a compressed air supply device (6) of the vehicle and can be controlled by an electronic control unit (10), in order, as required, to actuate the wheel valves (4a, 4b, 5a, 5b, 22a, 22b, 23a, 23b) of one or more vehicle wheels (2a, 2b, 3a, 3b, 20a, 20b, 21a, 21b) and control their tire pressures, **characterized in that** each of the vehicle axles (2, 3, 20, 21) of the vehicle included in the tire pressure control device (1, 19) is respectively assigned a control pressure line (S1, S2, S3, S4) with a respective control valve (15, 16, 26, 27), so that the actuation of the wheel valves (4a, 4b, 5a, 5b, 22a, 22b, 23a, 23b) of the vehicle wheels (2a, 2b, 3a, 3b, 20a, 20b, 21a, 21b) of the vehicle occurs by axle via the control valves (15, 16, 26, 27), and **in that** each of the two left and right vehicle sides of the vehicle is respectively assigned a supply pressure line supply pressure line (V1, V2) with at least one supply valve (11, 12), so that the vehicle wheels (2a, 2b, 3a, 3b, 20a, 20b, 21a, 21b) of the vehicle are supplied with compressed air by sides via the supply valves (11, 12) .

2. The tire pressure control device according to claim 1, **characterized in that** the respective control valves (15, 16, 26, 27) have two switch positions, wherein in a first switch position of the control valve (15, 16, 26, 27) the wheel valves (4a, 4b, 5a, 5b, 22a, 22b, 23a, 23b) of the vehicle wheels (2a, 2b, 3a, 3b, 20a, 20b, 21a, 21b) of the relevant vehicle axle connected to the associated control pressure line (S1, S2, S3, S4) are pneumatically connected to the compressed air supply device (6) of the vehicle and in a second switch position are blocked from it, and **in that** the respective supply valve (11, 12) has three switch positions, wherein in a first switch position of the supply valve (11, 12) the wheel valves (4a, 4b, 5a, 5b, 22a, 22b, 23a, 23b) of the vehicle wheels (2a, 2b, 3a, 3b, 20a, 20b, 21a, 21b) of the relevant vehicle axle connected to the associated supply pressure line supply pressure line (V1, V2) are connected to the compressed air supply device (6), in a second switch position are connected to an outlet (11a, 12a), and in a third switch position are blocked from the compressed air supply device (6) and from the outlet (11a, 12a).

3. The tire pressure control device according to claim 1 or 2, **characterized in that** each supply valve (11, 12) is respectively assigned an outlet (11a, 12a), so that a simultaneous pressure decrease at a plurality of vehicle wheels (2a, 2b, 3a, 3b, 20a, 20b, 21a, 21b) of a plurality of vehicle axles (2, 3, 20, 21) can be controlled by vehicle side.

4. The tire pressure control device according to any of claims 1 to 3, **characterized in that** each supply pressure line (V1, V2) is respectively assigned a tire pressure sensor (18a, 18b).

5. The tire pressure control device according to any of claims 1 to 4, **characterized in that** each supply pressure line (V1, V2) is respectively assigned a tire pressure relief valve (17a, 17b).

6. The tire pressure control device according to any of claims 1 to 5, **characterized in that** the tire pressure control device (1, 19) is embodied to carry out the following functions:
a) target pressure setting with terrain preselection option,
b) pressure monitoring with preselectable automatic and/or driver request,
c) puncture detection with warning indicator,
d) mechanical overpressure protection.

7. The tire pressure control device according to any of claims 1 to 6, **characterized in that** an error detection function is implemented in the tire pressure control device (1, 19), by means of which, upon the detection of a failure or malfunction of the electronic control unit (10), a warning signal can be generated and displayed.

8. The tire pressure control device according to any of claims 1 to 7, **characterized in that** the electronic control unit (10) is embodied as a 2-channel, 4-channel, 6-channel, 8-channel, 10-channel, 12-channel, 14-channel or 16-channel controller for one, two, three, four, five, six, seven or eight vehicle axles (2, 3, 20, 21).

9. The tire pressure control device according to any of claims 1 to 8, **characterized in that** two control units (10) embodied as 6-channel controllers or two control units embodied as 8-channel controllers are arranged for a tire pressure control on a six-axle or on an eight-axle vehicle, wherein the two relevant control units (10) are functionally connected to each other via a CAN bus and can be operated by means of a common operating unit (10a).

10. An off-highway vehicle, such as an agricultural tractor, a construction vehicle, a military vehicle, a special-purpose vehicle or a truck, as a single vehicle or as a towing vehicle/tractor vehicle combination, having a tire pressure control device (1, 19), which is constructed according to any of the device claims.

## Revendications

1. Équipement de régulation de pression de pneumatique (1, 19) d'un véhicule hors route à pneumatiques gonflables, au moyen duquel équipement de régulation de pression de pneumatique les pressions de pneumatique des roues de véhicule (2a, 2b, 3a, 3b, 20a, 20b, 21a, 21b) d'au moins un essieu de véhicule (2, 3, 20, 21) du véhicule peuvent être modifiées pendant le déplacement ou pendant une intervention de service, dans lequel chaque roue de véhicule (2a, 2b, 3a, 3b, 20a, 20b, 21a, 21b) à pneumatique gonflable présente une soupape de roue (4a, 4b, 5a, 5b, 22a, 22b, 23a, 23b) commandée par pression, laquelle est raccordée de façon pneumatique à un tuyau de pression de commande (S1, S2, S3, S4) et à un tuyau de pression d'alimentation (V1, V2), dans lequel des moyens de soupape (11, 12, 15, 16, 26, 27) sont attribués aux tuyaux de pression de commande (S1, S2, S3, S4) et aux tuyaux de pression d'alimentation (V1, V2), lesquels moyens de soupape sont ou peuvent être reliés de façon pneumatique à un équipement d'alimentation en air comprimé (6) du véhicule et peuvent être pilotés par une unité de commande (10) électronique pour, si nécessaire, actionner les soupapes de roue (4a, 4b, 5a, 5b, 22a, 22b, 23a, 23b) d'une ou plusieurs des roues de véhicule (2a, 2b, 3a, 3b, 20a, 20b, 21a, 21b) et réguler leurs pressions de pneumatique, **caractérisé en ce qu'**un tuyau de pression de commande (S1, S2, S3, S4) avec respectivement une soupape de commande (15, 16, 26, 27) est respectivement attribué à chacun des essieux de véhicule (2, 3, 20, 21) du véhicule impliqués dans l'équipement de régulation de pression de pneumatique (1, 19), de sorte que l'actionnement des soupapes de roue (4a, 4b, 5a, 5b, 22a, 22b, 23a, 23b) des roues de véhicule (2a, 2b, 3a, 3b, 20a, 20b, 21a, 21b) du véhicule se produise par essieu via les soupapes de commande (15, 16, 26, 27), et **en ce qu'**un tuyau de pression d'alimentation (V1, V2) avec respectivement au moins une soupape d'alimentation (11, 12) est respectivement attribué à chacun des deux côtés de véhicule gauche et droit du véhicule, de sorte que l'alimentation en air comprimé des roues de véhicule (2a, 2b, 3a, 3b, 20a, 20b, 21a, 21b) du véhicule se produise d'un côté via les soupapes d'alimentation (11, 12).

2. Équipement de régulation de pression de pneumatique selon la revendication 1, **caractérisé en ce que** les soupapes de commande (15, 16, 26, 27) respectives présentent deux positions de commutation, dans lequel, dans une première position de commutation de la soupape de commande (15, 16, 26, 27) les soupapes de roue (4a, 4b, 5a, 5b, 22a, 22b, 23a, 23b) des roues de véhicule (2a, 2b, 3a, 3b, 20a, 20b, 21a, 21b) de l'essieu de véhicule concerné, lesquelles soupapes de roue sont raccordées au tuyau de pression de commande (S1, S2, S3, S4) correspondant, sont reliées de façon pneumatique à l'équipement d'alimentation en air comprimé (6) du véhicule, et dans une seconde position de commutation sont verrouillées par celui-ci, et **en ce que** les soupapes d'alimentation (11, 12) respectives présentent trois positions de commutation, dans lequel, dans une première position de commutation de la soupape d'alimentation (11, 12) les soupapes de roue (4a, 4b, 5a, 5b, 22a, 22b, 23a, 23b) des roues de véhicule (2a, 2b, 3a, 3b, 20a, 20b, 21a, 21b) du côté de véhicule concerné, lesquelles soupapes de roue sont raccordées au tuyau de pression d'alimentation (V1, V2) correspondant, sont reliées à l'équipement d'alimentation en air comprimé (6), dans une deuxième position de commutation sont reliées à une sortie (11a, 12a), et dans une troisième position de commutation sont verrouillées par l'équipement d'alimentation en air comprimé (6) et par la sortie (11a, 12a).

3. Équipement de régulation de pression de pneumatique selon la revendication 1 ou 2, **caractérisé en ce qu'**une sortie (11a, 12a) est respectivement attribuée à chaque soupape d'alimentation (11, 12), de sorte qu'une baisse de pression simultanée au niveau de plusieurs roues de véhicule (2a, 2b, 3a, 3b, 20a, 20b, 21a, 21b) de plusieurs essieux de véhicule (2, 3, 20, 21) puisse être pilotée d'un côté de véhicule.

4. Équipement de régulation de pression de pneumatique selon l'une des revendications 1 à 3, **caractérisé en ce qu'**un capteur de pression de pneumatique (18a, 18b) est respectivement attribué à chaque tuyau de pression d'alimentation (V1, V2).

5. Équipement de régulation de pression de pneumatique selon l'une des revendications 1 à 4, **caractérisé en ce qu'**un limiteur de pression de gonflage (17a, 17b) est respectivement attribué à chaque tuyau de pression d'alimentation (V1, V2).

6. Équipement de régulation de pression de pneumatique selon l'une des revendications 1 à 5, **caractérisé en ce que** l'équipement de régulation de pression de pneumatique (1, 19) est conçu pour réaliser les fonctions suivantes :
a) réglage de la pression de consigne avec possibilité de présélection de terrain,
b) surveillance de pression avec dispositif automatique qui peut être présélectionné et/ou à la demande du conducteur,
c) reconnaissance de crevaison avec avertisseur,
d) protection mécanique contre la surpression.

7. Équipement de régulation de pression de pneumatique selon l'une des revendications 1 à 6, **caractérisé en ce qu'**une fonction de reconnaissance de défaut est mise en œuvre dans l'équipement de régulation de pression de pneumatique (1, 19), via laquelle, lors de la reconnaissance d'une défaillance ou d'une fonction de défaut de l'unité de commande (10) électronique, un signal de détresse peut être produit et affiché.

8. Équipement de régulation de pression de pneumatique selon l'une des revendications 1 à 7, **caractérisé en ce que** l'unité de commande (10) électronique est conçue en tant que commande de canal 2, canal 4, canal 6, canal 8, canal 10, canal 12, canal 14 ou canal 16, pour un, deux, trois, quatre, cinq, six, sept ou huit essieux de véhicule (2, 3, 20, 21).

9. Équipement de régulation de pression de pneumatique selon l'une des revendications 1 à 8, **caractérisé en ce que**, pour une régulation de pression de pneumatique sur un véhicule à six essieux ou un véhicule à huit essieux, sont agencées deux unités de commande (10) conçues en tant que commandes de canal 6 ou deux unités de commande conçues en tant que commandes de canal 8, dans lequel les deux unités de commande (10) concernées sont fonctionnellement reliées ensemble via un bus CAN et peuvent être utilisées au moyen d'une unité de service (10a) commune.

10. Véhicule hors route, tels un tracteur agricole, un engin de chantier, un véhicule militaire, un véhicule spécial ou un poids lourd, en tant que véhicule individuel ou en tant que combinaison de véhicule tracteur-véhicule remorque, avec un équipement de régulation de pression de pneumatique (1, 19), lequel est monté selon l'une des revendications de dispositif.
